# FASCICULE DE BREVET EUROPEEN

(11) **EP 3 196 542 B1**
(45) Date de publication et mention de la délivrance du brevet: **01.06.2022**
(21) Numéro de dépôt: 17152175.0
(22) Date de dépôt: 19.01.2017
(51) Int. Cl.: F21S 41/686, F21S 41/47

(54) **MÉCANISME DE COUPURE POUR PROJECTEUR DE VÉHICULE AUTOMOBILE, À BARRETTE DE COUPURE AMOVIBLE**
ABSCHIRMMECHANISMUS FÜR SCHEINWERFER EINES KRAFTFAHRZEUGS MIT HERAUSNEHMBARER BLENDENLEISTE
CUT-OFF MECHANISM FOR MOTOR VEHICLE HEADLIGHT WITH REMOVABLE SCREEN BLADE

(30) Priorité: 20.01.2016 FR 1650442
(43) Date de publication de la demande: 26.07.2017
(73) Titulaire: AML Systems, 75008 Paris (FR)
(72) Inventeur: NORONHA, Anderson, 94120 Fontenay sous bois (FR); CHIATTELLI, Claudio, 93150 Le Blanc-Mesnil (FR)
(74) Mandataire: Gevers & Orès

(56) Documents cités:
- EP-A2- 2 527 726
- FR-A1- 2 986 197
- JP-A- 2002 133 914
- US-A1- 2009 059 612

## Description

Le domaine de la présente invention est celui des projecteurs de lumière et, plus particulièrement, celui des projecteurs pour véhicule automobile.

Les projecteurs de véhicule automobile comprennent généralement une source lumineuse qui projette de la lumière sur un réflecteur. La lumière est ensuite réfléchie sur une lentille afin d'être renversée et renvoyée sous forme de faisceau lumineux à l'extérieur du véhicule. Les projecteurs comprennent également un mécanisme de coupure permettant d'occulter ou non une partie du faisceau réfléchi, ainsi que et des moyens de contrôle de la forme du faisceau pour adapter celui-ci aux circonstances de la conduite.

Il est connu d'utiliser des mécanismes de coupure comprenant une barrette de coupure rotative. La barrette de coupure est actionnée électriquement pour se déplacer, sur commande, entre au moins deux positions angulaires dans lesquelles elle occulte plus ou moins le faisceau lumineux. Dans le cas d'un projecteur dit bi-fonction, ces deux positions sont une première position angulaire, dans laquelle la barrette de coupure occulte une partie du faisceau lumineux afin de limiter la portée du projecteur à celle des feux de croisement pour ne pas éblouir les autres conducteurs circulant en sens inverse, et une deuxième position angulaire, dans laquelle elle n'occulte pas le faisceau lumineux, la portée du projecteur correspondant alors à celle des feux de route. Il existe également des projecteurs dits multifonction, dans lesquels la barrette de coupure peut adopter plus de deux positions angulaires pour occulter de façon sélective le faisceau lumineux.

La barrette de coupure est fixée sur un élément de support d'un équipage mobile qui est mû en rotation par un moteur d'actionnement.

La fixation de la barrette de coupure sur l'élément de support qui est généralement réalisée par vissage, n'est pas facile à mettre en œuvre et nécessite un certain temps.

Or, il pourrait être intéressant que la barrette de coupure qui participe directement à l'intensité et à l'orientation du faisceau lumineux émis par le projecteur puisse être changée, notamment en fonction de la règlementation du pays d'utilisation, ou du type de projecteur ou de source lumineuse considéré.

La fixation telle que réalisée de façon usuelle n'est donc guère adaptée à des changements de barrette de coupure, ni à une standardisation du mécanisme de coupure.

Par ailleurs, on connaît, par le document EP- 2 527 726, un ensemble pour mécanisme de coupure de projecteur de véhicule automobile, comprenant un équipage mobile, un élément de support et une barrette de coupure apte à être fixée sur l'élément de support.

La présente invention a pour but de proposer un ensemble mobile comprenant une barrette de coupure, qui ne présente pas les inconvénients de l'art antérieur, et notamment qui permet de mettre en œuvre, facilement et rapidement, un changement de barrette de coupure et ceci à coût réduit.

L'invention concerne un ensemble mobile pour mécanisme de coupure de projecteur de véhicule automobile, tel que défini dans la revendication indépendante 1, l'ensemble mobile comprenant au moins un équipage mobile et une barrette de coupure apte à être montée sur un élément de support de l'équipage mobile.

Selon l'invention, ledit élément de support comprend au moins un logement, ladite barrette de coupure est pourvue d'au moins un pied de fixation, et ledit logement et ledit pied de fixation sont coopérants et sont configurés de manière à permettre d'obtenir une position dite montée dans laquelle le pied de fixation est inséré dans le logement, suite à une insertion par (simple) pression (du pied de fixation dans le logement), de manière à pouvoir générer une fixation amovible de la barrette de coupure sur l'équipage mobile.

Ainsi, grâce au logement et au pied de fixation et à leur coopération, on obtient une fixation amovible de la barrette de coupure sur l'équipage mobile, qui peut être mise en place ou enlevée rapidement et simplement, en exerçant une force pour l'insérer ou la retirer, ce qui permet de remédier à l'inconvénient précité de l'art antérieur.

Aussi, en prévoyant des logements et des pieds de fixation identiques, on peut monter différentes barrettes de coupures sur différents ensembles mobiles, ce qui favorise une standardisation et entraîne une réduction de coût.

Selon l'invention, le logement et le pied de fixation coopérants présentent une forme et des dimensions respectivement adaptées pour générer au moins des contacts dits latéraux dans la position montée, l'adjectif latéral s'appliquant aux côtés de la largeur du pied de fixation de forme allongée, de part et d'autre d'un axe longitudinal.

Selon l'invention, ledit pied de fixation présente une forme générale plane allongée, et la longueur du pied de fixation le long d'un axe longitudinal et la profondeur du logement sont adaptées l'un à l'autre pour obtenir un positionnement donné de la barrette de coupure sur l'équipage mobile, lors d'un contact de l'extrémité longitudinale libre du pied de fixation contre le fond du logement.

Par ailleurs, dans un mode de réalisation particulier, le pied de fixation est pourvu d'au moins une griffe de maintien configurée pour s'accrocher dans une paroi du logement coopérant dans la position montée.

De préférence, ladite griffe de maintien est une plaquette saillante pointue. Cette ou de préférence ces griffes de maintien participent au maintien de la liaison solidaire dans la position montée, sans empêcher qu'elle soit amovible.

En outre, pour augmenter ce maintien, le pied de fixation comprend, selon l'invention, au moins un bourrelet transversal configuré pour venir au contact d'une paroi du logement coopérant, l'adjectif transversal s'appliquant aux côtés de l'épaisseur du pied de fixation.

De préférence, ledit bourrelet correspond :
- à une ondulation du pied de fixation ;
- à une augmentation de l'épaisseur du pied de fixation ;
- à un bourrelet rapporté sur le pied de fixation.

Par ailleurs, dans un mode de réalisation préféré, le projecteur comporte deux pieds de fixation et deux logements respectivement coopérants.

Avantageusement, l'élément de support est pourvu d'une branche entre les deux logements, et les deux pieds de fixation sont espacés l'un de l'autre de manière à présenter, entre eux, un espacement de forme et dimensions respectivement adaptées à celles de ladite branche.

De plus, de façon avantageuse, parmi les deux pieds de fixation, le pied de fixation situé vers une extrémité proche de la barrette de coupure, présente une extrémité longitudinale en biseau, et le logement coopérant est pourvu d'un fond de forme au moins partiellement adaptée à cette extrémité longitudinale en biseau

Par ailleurs, avantageusement, le pied de fixation et la barrette de coupure sont réalisés en une seule et même pièce.

La présente invention peut être adaptée à différentes dispositions géométriques du ou des pieds de fixation sur la barrette de coupure.

Ainsi, de façon avantageuse, chacun des pieds de fixation présentant une forme générale plane est agencé sur la barrette de coupure présentant également une forme générale plane de sorte que l'une des deux conditions suivantes est remplie :
- le plan du pied de fixation est situé dans le plan de la barrette de coupure ;
- le plan du pied de fixation est situé hors du plan de la barrette de coupure.

En outre, avantageusement, chacun des pieds de fixation présentant un axe longitudinal est agencé sur la barrette de coupure de sorte que son axe longitudinal remplit l'une des conditions suivantes :
- il est orthogonal à un axe longitudinal de la barrette de coupure ;
- il n'est pas orthogonal à l'axe longitudinal de la barrette de coupure.

La présente invention concerne également au moins un ensemble mobile comprenant au moins une barrette de coupure et un équipage mobile, ainsi qu'un moteur d'actionnement de l'ensemble mobile. Selon l'invention, ledit ensemble mobile est tel que celui décrit ci-dessus.

La présente invention concerne, en outre, un projecteur pour véhicule automobile comprenant au moins un ensemble mobile et/ou au moins un mécanisme de coupure, tels que ceux décrits ci-dessus.

L'invention sera mieux comprise, et d'autres buts, détails, caractéristiques et avantages de celle-ci apparaîtront plus clairement au cours de la description explicative détaillée qui va suivre, de modes de réalisation de l'invention donnés à titre d'exemple purement illustratif et non limitatif, en référence aux dessins schématiques annexés. Sur ces dessins :
- les figures 1 et 2 sont des vues de face d'un mécanisme de coupure, respectivement dans la position de route et dans la position de code ;
- la figure 3 est une vue partielle, en perspective, d'éléments non montés d'un ensemble mobile d'un mécanisme de coupure ;
- les figures 4 et 5 sont des vues schématiques de face d'une partie d'un ensemble mobile, respectivement dans une position d'insertion et dans une position montée (ou insérée) de pieds de fixations de la barrette de coupure dans des logements coopérants d'un élément de support ;
- la figure 6 est une vue en coupe, selon une ligne A-A de la figure 5, de l'ensemble mobile dans la position montée ; et
- les figures 7A et 7B montrent schématiquement différents exemples de bourrelets présents sur un pied de fixation.

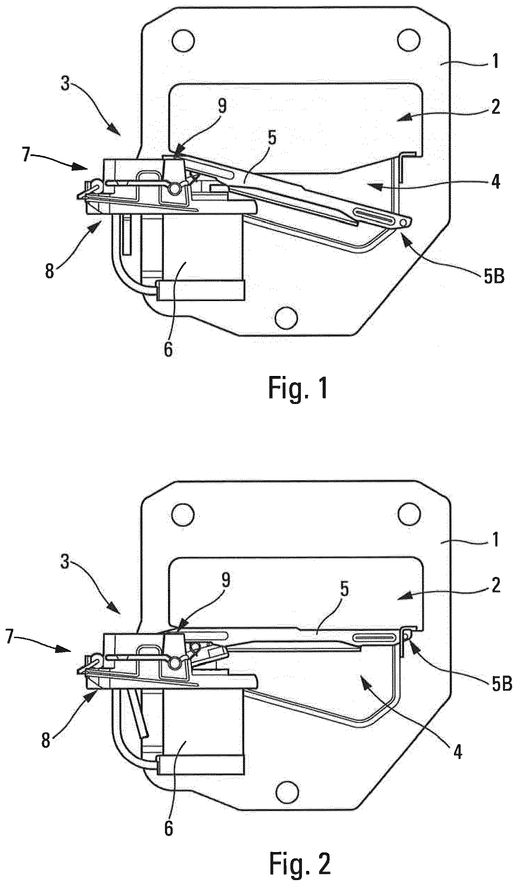

La présente invention s'applique à un projecteur (non représenté) de véhicule automobile, configuré pour générer un faisceau lumineux. Ce projecteur comprend généralement une armature 1 (figures 1 et 2) de forme rectangulaire. Cette armature 1 s'étend dans un plan orthogonal à l'axe optique du faisceau lumineux et est découpée en son centre, comme représenté sur les figures 1 et 2, pour former une ouverture 2 permettant de passer ledit faisceau lumineux. Sur cette armature 1 est fixé un mécanisme de coupure 3, dont la fonction est d'obturer plus ou moins le faisceau lumineux en fonction notamment des conditions de circulation du véhicule. Le projecteur comporte également, de façon usuelle, en arrière de cette armature 2, les éléments suivants non représentés : une source lumineuse génératrice du faisceau lumineux et un réflecteur qui oriente ce faisceau lumineux vers l'avant et vers une lentille.

Dans la présente description, les termes avant et arrière sont définis par rapport au sens d'émission du faisceau lumineux, et les termes bas et haut sont définis par rapport à la position du projecteur sur le véhicule.

En se référant aux figures 1 et 2, on voit, en vue de face, respectivement en position de route et en position de code, le mécanisme de coupure 3 qui est monté en position basse sur l'armature 1. Cette armature 1 comporte, en partie basse de l'ouverture 2, un cache fixe 4 qui obture en partie cette découpe et devant lequel peut se mouvoir une barrette (ou lame) de coupure 5 pour moduler la forme du faisceau en sortie du projecteur. Cette barrette de coupure 5 qui fait partie du mécanisme de coupure 3, est mobile en rotation dans un plan perpendiculaire au faisceau lumineux, et elle est mue par un moteur d'actionnement 6.

Sur la figure 1, correspondant à la position de route, la barrette de coupure 5 est escamotée, c'est-à-dire qu'elle est inclinée vers le bas et laisse apparaître le cache fixe 4, ce qui laisse passer la quasi-totalité du faisceau lumineux à travers l'ouverture 3.

En revanche sur la figure 2, correspondant à la position de code, la barrette de coupure 5 est relevée, et elle coupe le faisceau lumineux sur une plus grande hauteur que ne le ferait le seul cache fixe 4. Après son renversement par la lentille, le faisceau lumineux est alors orienté vers le bas, ce qui évite d'éblouir les conducteurs des véhicules venant en sens inverse.

Le mécanisme de coupure 3 comporte un ensemble mobile 7 comprenant la barrette de coupure 5 et un équipage mobile 8, ainsi qu'un moteur d'actionnement 6 de l'ensemble mobile 7.

La barrette de coupure 5 est déplaçable, de façon usuelle, sous l'action du moteur d'actionnement 6 via l'équipage mobile 8.

La barrette de coupure 5 est déplacée pour moduler la forme du faisceau lumineux en sortie du projecteur. Cette barrette de coupure 5 qui est mue par le moteur d'actionnement 6, est mobile en rotation, dans le plan qui est orthogonal à l'axe du faisceau lumineux.

Le moteur d'actionnement 6 permet donc à la barrette de coupure 5 de se positionner selon plusieurs positions, en particulier selon les deux positions précitées représentées respectivement sur les figures 1 et 2, afin d'obturer plus ou moins le faisceau lumineux.

Dans un mode de réalisation préféré, le moteur d'actionnement 6 pour actionner la barrette de coupure 5 comporte un électroaimant (non représenté). Cet électroaimant comprend, par exemple, un bobinage et un noyau ferromagnétique fixe, sensiblement cylindrique, qui est placé au centre de ce bobinage, le long de son axe de symétrie.

La barrette de coupure 5 est apte à être montée par une extrémité 5A sur un élément de support 9 de l'équipage mobile 8, l'extrémité 5B opposée à cette extrémité 5A étant une extrémité libre.

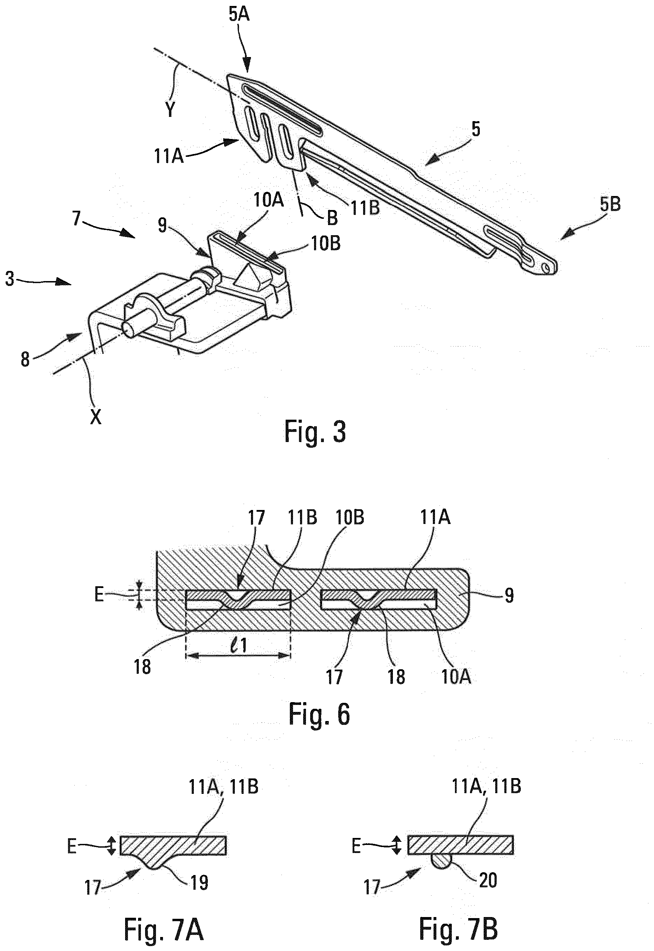

L'équipage mobile 8 est donc mobile autour d'un axe X (figure 3) sous l'action du moteur d'actionnement 6, à l'encontre d'un ressort de rappel (non représenté), entre une position de repos (figure 2) et une position d'activation (figure 1).

Selon l'invention :
- l'élément de support 9 comprend au moins un logement 10A, 10B, comme représenté sur les figures 3 à 5 ;
- la barrette de coupure 5 est pourvue d'au moins un pied de fixation 11A, 11B ; et
- chaque pied de fixation 11A, 11B est destiné et associé à un logement 10A, 10B. Chaque logement 10A, 10B et chaque pied de fixation 11A, 11B associés sont coopérants et sont configurés de manière à permettre d'obtenir une position dite montée dans laquelle le pied de fixation 11A, 11B est complètement inséré dans le logement 10A, 10B associé coopérant.

Le logement 10A, 10B peut présenter la forme d'une fente allongée, par exemple de forme rectangulaire en section, présentant une ouverture sur le haut et un fond fermé opposé à l'ouverture.

Selon l'invention, l'insertion est mise en œuvre par simple pression du pied de fixation 11A, 11B dans le logement 10A, 10B coopérant, comme précisé ci-dessous. Le logement 10A, 10B et le pied de fixation 11A, 11B coopérants sont configurés de manière à pouvoir générer une fixation amovible de la barrette de coupure 5 sur l'équipage mobile 8.

Dans le mode de réalisation préféré, représenté sur les figures 3 à 6, l'ensemble mobile 7 comporte deux pieds de fixation 11A et 11B et deux logements 10A et 10B respectivement coopérants.

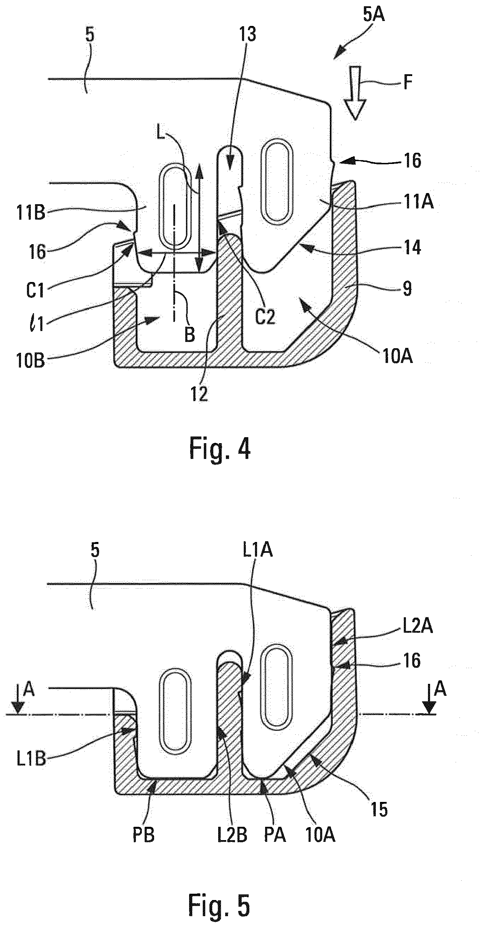

La barrette de coupure 5 est donc montée par simple insertion dans l'équipage mobile 8. Pour ce faire, les pieds de fixation 10A et 10B sont insérés, à partir de la position non assemblée de la figure 3, par pression dans le sens illustré par une flèche F sur la figure 4 dans une position d'insertion, jusqu'à obtenir la position insérée (ou montée) de la figure 5.

Ainsi, grâce au(x) logement(s) 10A, 10B et au(x) pied(s) de fixation 11A, 11B et à leur coopération, on obtient une fixation (ou solidarisation) amovible de la barrette de coupure 5 sur l'équipage mobile 8, qui peut être mise en place ou enlevée rapidement et simplement, en exerçant simplement une force pour l'insérer ou la retirer.

Comme représenté sur les figures 4 et 5, l'élément de support 9 est pourvu d'une branche (ou paroi) 12 formée entre les deux logements 10A et 10B, et les deux pieds de fixation 11A et 11B sont espacés l'un de l'autre de manière à présenter, entre eux, un espacement 13 de forme et dimensions respectivement adaptées à celles de ladite branche 12.

De plus, dans le mode de réalisation représenté sur les figures 4 et 5, le pied de fixation 11A situé vers l'extrémité 5B de la barrette de coupure 5, présente une extrémité longitudinale pourvue d'un biseau 14, et le logement 10A coopérant est pourvu d'un fond présentant un bord incliné 15 au moins partiellement adapté audit biseau 14.

Le logement et le pied de fixation coopérants (de chaque paire de logement et de pied de fixation) présentent une forme et des dimensions respectivement adaptées, pour générer au moins des contacts dits latéraux dans la position montée, afin d'obtenir un maintien suffisant. L'adjectif latéral s'applique, comme représenté à titre d'exemple pour le pied de fixation 11B sur la figure 4, aux côtés C1 et C2 de la largeur I1 du pied de fixation 11B de forme allongée, de part et d'autre d'un axe longitudinal B du pied de fixation 11B. Les contacts latéraux des pieds de fixation 11A et 11B dans les logements 10A et 10B coopérants sont signalés par des références L1A et L2A, et L1B et L2B respectivement, sur la figure 5.

En outre, chaque pied de fixation 11A et 11B présente une forme générale plane allongée. La longueur L de chaque pied de fixation le long de l'axe longitudinal B, comme représenté pour le pied de fixation 11B sur la figure 4, et la profondeur du logement coopérant sont adaptées l'un à l'autre, pour obtenir un positionnement donné de la barrette de coupure 5 sur l'équipage mobile 8, lors d'un contact de l'extrémité longitudinale libre du pied de fixation 11A, 11B contre le fond du logement 10A, 10B, comme montré par une flèche PA, PB sur la figure 5.

Par ailleurs, dans un mode de réalisation particulier, les pieds de fixation 11A et 11B sont pourvus de griffes de maintien 16 configurées pour s'accrocher dans une paroi du logement coopérant dans la position montée de la figure 5.

De préférence, chaque griffe de maintien 16 est une plaquette saillante pointue, formée dans le pied de fixation correspondant. Ces griffes de maintien 16 participent au maintien de la liaison solidaire dans la position montée, sans empêcher qu'elle soit amovible.

En outre, pour augmenter ce maintien, chaque pied de fixation 11A et 11B comprend, de plus, au moins un bourrelet 17 transversal configuré pour venir au contact d'une paroi du logement 10A, 10B coopérant. L'adjectif transversal s'applique aux côtés de l'épaisseur E du pied de fixation, comme représenté pour le pied 11B sur la figure 6.

Le bourrelet 17 peut correspondre notamment :
- à une ondulation 18 du pied de fixation 11A, 11B, c'est-à-dire que le pied de fixation 11A, 11B présente une forme au moins partiellement ondulée, comme représenté sur la figure 6 ; ou
- à une augmentation 19 de l'épaisseur du pied de fixation 11A, 11B, comme représenté sur la figure 7A ; ou
- à un bourrelet 20 rapporté sur le pied de fixation 11A, 11B, comme représenté sur la figure 7B.

La présente invention peut être appliquée à différentes dispositions géométriques du ou des pieds de fixation 11A, 11B sur la barrette de coupure 5. Chaque pied de fixation 11A, 11B présente une forme générale plane, et il est agencé sur la barrette de coupure 5 qui présente également une forme générale plane.

Dans un mode de réalisation préféré, le plan du pied de fixation 11A, 11B est situé dans le plan de la barrette de coupure 5, comme représenté sur les figures 3 à 5.

Toutefois, dans le cadre de la présente invention, il est également envisageable, dans une variante de réalisation, que le plan du pied de fixation soit situé hors du plan de la barrette de coupure, soit en étant incliné par rapport à ce dernier, soit en étant orthogonal. Dans ce dernier cas, au lieu de réaliser une insertion de haut en bas comme illustré sur la figure 4, on réalise une insertion d'avant en arrière ou d'arrière en avant.

Par ailleurs, chaque pied de fixation 11A, 11B présente un axe général longitudinal, comme l'axe B du pied de fixation 11B (figure 4). Dans un mode de réalisation préféré, l'axe longitudinal B de chaque pied de fixation est sensiblement orthogonal à l'axe longitudinal Y de la barrette de coupure 5, comme représenté sur la figure 3.

Toutefois, dans le cadre de la présente invention, il est également envisageable, dans une variante de réalisation, que l'axe longitudinal de chacun des pieds de fixation ne soit pas orthogonal à l'axe longitudinal Y de la barrette de coupure 5, soit en étant incliné par rapport à ce dernier, soit en étant parallèle. Dans ce dernier cas, au lieu de réaliser une insertion de haut en bas comme illustré sur la figure 4, on réalise une insertion suivant la direction Y.

On notera que le fonctionnement du mécanisme de coupure 3 tel que décrit ci-dessus est similaire au fonctionnement d'un mécanisme de coupure usuel de même type.

Par ailleurs, pour la mise en place de la barrette de coupure 5 sur l'équipage mobile 8, on réalise, comme indiqué ci-dessus, l'opération suivante.

On monte la barrette de coupure 5 par simple insertion dans l'équipage mobile 8. Pour ce faire, les pieds de fixation 10A et 10B sont insérés, à partir de la position non assemblée de la figure 3, par pression (dans le sens illustré par la flèche F sur la figure 4 dans une position d'insertion), jusqu'à obtenir la position insérée (ou montée) de la figure 5.

La séparation de la barrette de coupure 5 est réalisée en la tirant dans un sens opposé à celui de la flèche F de la figure 4, à partir de la position insérée de la figure 5.

La liaison est donc amovible.

Ainsi, en prévoyant des logements et des pieds de fixation identiques, on peut monter différentes barrettes de coupures sur différents ensembles mobiles, ce qui, notamment, favorise une standardisation et entraîne une réduction de coût.

## Revendications

1. Ensemble mobile pour mécanisme de coupure de projecteur de véhicule automobile, l'ensemble mobile (7) comprenant au moins un équipage mobile (8) et une barrette de coupure (5) apte à être montée sur un élément de support (9) de l'équipage mobile (8),
ledit élément de support (9) comprenant au moins un logement (10A, 10B), ladite barrette de coupure (5) étant pourvue d'au moins un pied de fixation (11A, 11B), ledit logement (10A, 10B) et ledit pied de fixation (11A, 11B) étant coopérants et étant configurés de manière à permettre d'obtenir une position dite montée dans laquelle le pied de fixation (11A, 11B) est inséré dans le logement (10A, 10B), suite à une insertion par pression, de manière à pouvoir générer une fixation amovible de la barrette de coupure (5) sur l'équipage mobile (8),
**caractérisé en ce que** le logement (10A, 10B) et le pied de fixation (11A, 11B) coopérants présentent une forme et des dimensions respectivement adaptées pour générer au moins des contacts dits latéraux (L1A, L2A, L1B, L2B) dans la position montée, l'adjectif latéral s'appliquant aux côtés (C1, C2) de la largeur (I1) du pied de fixation (11A, 11B) de forme allongée, de part et d'autre d'un axe longitudinal (B) du pied de fixation (11A, 11B),
ledit pied de fixation (11A, 11B) présentant une forme générale plane allongée, la longueur (L) du pied de fixation (11A, 11B) le long d'un axe longitudinal (B) et la profondeur du logement (10A, 10B) étant adaptées l'un à l'autre pour obtenir un positionnement donné de la barrette de coupure (5) sur l'équipage mobile (8), lors d'un contact (PA, PB) de l'extrémité longitudinale libre du pied de fixation (11A, 11B) contre le fond du logement (10A, 10B),
ledit pied de fixation (11A, 11B) comprenant au moins un bourrelet transversal (17) configuré pour venir au contact d'une paroi du logement coopérant, l'adjectif transversal s'appliquant aux côtés de l'épaisseur (E) du pied de fixation (11A, 11B).

2. Ensemble mobile selon l'une quelconque des revendications précédentes,
**caractérisé en ce que** le pied de fixation (11A, 11B) est pourvu d'au moins une griffe de maintien (16) configurée pour s'accrocher dans une paroi du logement (10A, 10B) coopérant dans la position montée.

3. Ensemble mobile selon la revendication 2,
**caractérisé en ce que** ladite griffe de maintien (16) est une plaquette saillante pointue.

4. Ensemble mobile selon la revendication 1,
**caractérisé en ce que** ledit bourrelet (17) correspond :
- à une ondulation (18) du pied de fixation (11A, 11B) ; ou
- à une augmentation (19) de l'épaisseur (E) du pied de fixation (11A, 11B) ; ou
- à un bourrelet (20) rapporté sur le pied de fixation (11A, 11B).

5. Ensemble mobile selon l'une quelconque des revendications précédentes,
**caractérisé en ce qu'**il comporte au moins deux pieds de fixation (11A, 11B) et au moins deux logements (10A, 10B) respectivement coopérants.

6. Ensemble mobile selon la revendication 5,
**caractérisé en ce que** l'élément de support (9) est pourvu d'une branche (12) entre les deux logements (10A, 10B), et **en ce que** les au moins deux pieds de fixation (11A, 11B) sont espacés l'un de l'autre de manière à présenter, entre eux, un espacement (13) de forme et dimensions respectivement adaptées à celles de ladite branche (12).

7. Ensemble mobile selon la revendication 6,
**caractérisé en ce que**, parmi les au moins deux pieds de fixation (11A, 11B), le pied de fixation (11A) situé vers une extrémité (5A) proche de la barrette de coupure (5), présente une extrémité longitudinale en biseau (14), et **en ce que** le logement coopérant (10A) est pourvu d'un fond de forme (15) au moins partiellement adaptée à cette extrémité longitudinale en biseau (14).

8. Ensemble mobile selon l'une quelconque des revendications 5 à 7,
**caractérisé en ce que** les au moins deux pieds de fixation (11A, 11B) et la barrette de coupure (5) sont réalisés en une seule et même pièce.

9. Ensemble mobile selon l'une quelconque des revendications 5 à 8,
**caractérisé en ce que** les au moins deux pieds de fixation (11A, 11B) présentant une forme générale plane sont agencés sur la barrette de coupure (5) présentant également une forme générale plane de sorte que l'une des deux conditions suivantes est remplie :
- le plan des au moins deux pieds de fixation (11A, 11B) est situé dans le plan de la barrette de coupure (5) ;
- le plan des au moins deux pieds de fixation est situé hors du plan de la barrette de coupure (5).

10. Ensemble mobile selon l'une quelconque des revendications 5 à 9,
**caractérisé en ce que** les au moins deux pieds de fixation (11A, 11B) présentant un axe longitudinal (B) sont agencés sur la barrette de coupure (5) de sorte que leur axe longitudinal (B) remplit l'une des conditions suivantes :
- il est orthogonal à un axe longitudinal (Y) de la barrette de coupure (5) ;
- il n'est pas orthogonal à l'axe longitudinal de la barrette de coupure (5).

11. Mécanisme de coupure pour projecteur automobile, ledit mécanisme de coupure (3) comportant au moins un ensemble mobile (7) comprenant au moins une barrette de coupure (5) et un équipage mobile (8), ainsi qu'un moteur d'actionnement (6) de l'ensemble mobile (7),
**caractérisé en ce que** ledit ensemble mobile (7) est tel que celui spécifié sous l'une quelconque des revendications 1 à 10.

12. Projecteur pour véhicule automobile,
**caractérisé en ce qu'**il comporte au moins un mécanisme de coupure (3) tel que celui spécifié sous la revendication 11.

## Patentansprüche

1. Bewegliche Baugruppe für einen Abblendmechanismus eines Scheinwerfers eines Kraftfahrzeugs, wobei die bewegliche Baugruppe (7) mindestens eine bewegliche Einrichtung (8) und eine Blendenleiste (5) umfasst, die imstande ist, an einem Stützelement (9) der beweglichen Einrichtung (8) montiert zu werden,
wobei das Stützelement (9) mindestens einen Aufnahme (10A, 10B) umfasst, die Blendenleiste (5) mit mindestens einem Befestigungsfuß (11A, 11B) versehen ist, wobei die Aufnahme (10A, 10B) und der Befestigungsfuß (11A, 11B) zusammenwirkend und derart konfiguriert sind, um zu ermöglichen, eine sogenannte montierte Position zu erhalten, in der der Befestigungsfuß (11A, 11B) infolge einer druckbeaufschlagten Einführung in die Aufnahme (10A, 10B) eingeführt ist, um eine lösbare Befestigung der Blendenleiste (5) an der beweglichen Einrichtung (8) erzeugen zu können,
**dadurch gekennzeichnet, dass** die Aufnahme (10A, 10B) und der Befestigungsfuß (11A, 11B), die zusammenwirkend sind, eine Form und Abmessungen aufweisen, die jeweils angepasst sind, um in der montierten Position mindestens sogenannte seitliche Kontakte (L1A, L2A, L1B, L2B) zu erzeugen, wobei sich das Adjektiv seitlich auf die Seiten (C1, C2) der Breite (11) des Befestigungsfußes (11A, 11B) in länglicher Form beiderseits einer Längsachse (B) des Befestigungsfußes (11A, 11B) bezieht,
wobei der Befestigungsfuß (11A, 11B) eine allgemeine längliche ebene Form aufweist, die Länge (L) des Befestigungsfußes (11A, 11B) entlang einer Längsachse (B) und die Tiefe der Aufnahme (10A, 10B) aneinander angepasst sind, um eine gegebene Positionierung der Blendenleiste (5) auf der beweglichen Einrichtung (8) bei einem Kontakt (PA, PB) des freien Längsendes des Befestigungsfußes (11A, 11B) am Boden der Aufnahme (10A, 10B) zu erhalten,
wobei der Befestigungsfuß (11A, 11B) mindestens einen quer verlaufenden Wulst (17) umfasst, der konfiguriert ist, um in Kontakt mit einer Wand der zusammenwirkenden Aufnahme zu gelangen, wobei sich das Adjektiv quer verlaufend auf die Seiten der Dicke (E) des Befestigungsfußes (11A, 11B) bezieht.

2. Bewegliche Baugruppe nach einem der vorstehenden Ansprüche,
**dadurch gekennzeichnet, dass** der Befestigungsfuß (11A, 11B) mit mindestens einer Haltekralle (16) versehen ist, die konfiguriert ist, um sich in der montierten Position in einer Wand der zusammenwirkenden Aufnahme (10A, 10B) einzuhaken.

3. Bewegliche Baugruppe nach Anspruch 2,
**dadurch gekennzeichnet, dass** die Haltekralle (16) ein spitzes vorspringendes Plättchen ist.

4. Bewegliche Baugruppe nach Anspruch 1,
**dadurch gekennzeichnet, dass** der Wulst (17) Folgendem entspricht:
- einer Wellung (18) des Befestigungsfußes (11A, 11B); oder
- einer Vergrößerung (19) der Dicke (E) des Befestigungsfußes (11A, 11B); oder
- einem beigebrachten Wulst (20) auf dem Befestigungsfuß (11A, 11B).

5. Bewegliche Baugruppe nach einem der vorstehenden Ansprüche,
**dadurch gekennzeichnet, dass** sie mindestens zwei Befestigungsfüße (11A, 11B) und mindestens zwei Aufnahmen (10A, 10B) beinhaltet, die jeweils zusammenwirkend sind.

6. Bewegliche Baugruppe nach Anspruch 5,
**dadurch gekennzeichnet, dass** das Stützelement (9) mit einem Zweig (12) zwischen zwei Aufnahmen (10A, 10B) versehen ist, und dadurch, dass die mindestens zwei Befestigungsfüße (11A, 11B) derart voneinander beabstandet sind, um zwischen einander einen Freiraum (13) in einer Form und Abmessungen aufzuweisen, die jeweils jenen des Zweigs (12) angepasst sind.

7. Bewegliche Baugruppe nach Anspruch 6,
**dadurch gekennzeichnet, dass** unter den mindestens zwei Befestigungsfüßen (11A, 11B) jener Befestigungsfuß (11A), der sich an einem Ende (5A) nahe der Blendenleiste (5) befindet, ein abgeschrägtes Längsende (14) aufweist, und dadurch, dass die zusammenwirkende Aufnahme (10A) mit einem Boden in einer Form (15) versehen ist, die mindestens teilweise diesem abgeschrägten Längsende (14) angepasst ist.

8. Bewegliche Baugruppe nach einem der Ansprüche 5 bis 7,
**dadurch gekennzeichnet, dass** die mindestens zwei Befestigungsfüße (11A, 11B) und die Blendenleiste (5) aus ein und demselben Stück gefertigt sind.

9. Bewegliche Baugruppe nach einem der Ansprüche 5 bis 8,
**dadurch gekennzeichnet, dass** die mindestens zwei Befestigungsfüße (11A, 11B), die eine allgemeine ebene Form aufweisen, auf der Blendenleiste (5) angeordnet sind, die ebenfalls eine allgemeine ebene Form aufweist, sodass die eine der beiden folgenden Bedingungen erfüllt ist:
- die Ebene der mindestens zwei Befestigungsfüße (11A, 11B) befindet sich in der Ebene der Blendenleiste (5);
- die Ebene der mindestens zwei Befestigungsfüße befindet sich außerhalb der Ebene der Blendenleiste (5).

10. Bewegliche Baugruppe nach einem der Ansprüche 5 bis 9,
**dadurch gekennzeichnet, dass** die mindestens zwei Befestigungsfüße (11A, 11B), die eine Längsachse (B) aufweisen, derart auf der Blendenleiste (5) angeordnet sind, dass ihre Längsachse (B) eine der folgenden Bedingungen erfüllt:
- sie ist orthogonal zu einer Längsachse (Y) der Blendenleiste (5);
- sie ist nicht orthogonal zur Längsachse der Blendenleiste (5).

11. Abblendmechanismus eines Scheinwerfers eines Kraftfahrzeugs, wobei der Abblendmechanismus (3) mindestens eine bewegliche Baugruppe (7) beinhaltet, die mindestens eine Blendenleiste (5) und eine bewegliche Einrichtung (8), sowie einen Betätigungsmotor (6) der beweglichen Baugruppe (7) umfasst,
**dadurch gekennzeichnet, dass** die bewegliche Baugruppe (7) nach einem der Ansprüche 1 bis 10 ist.

12. Scheinwerfer eines Kraftfahrzeugs,
**dadurch gekennzeichnet, dass** er mindestens einen Abblendmechanismus (3) nach Anspruch 11 beinhaltet.

## Claims

1. Movable assembly for a cut-off mechanism of a motor vehicle headlamp, the movable assembly (7) comprising at least one movable device (8) and a cut-off bar (5) suitable for fitting to a support element (9) of the movable device (8),
said support element (9) comprising at least one housing (10A, 10B), said cut-off bar (5) being provided with at least one attachment foot (11A, 11B), said housing (10A, 10B) and said attachment foot (11A, 11B) cooperating and being configured to allow a fitted position to be obtained in which the attachment foot (11A, 11B) is inserted in the housing (10A, 10B), following insertion by pressure, so that the cut-off bar (5) can be attached removably to the movable device (8),
**characterised in that** the cooperating housing (10A, 10B) and attachment foot (11A, 11B) have a shape and dimensions adapted respectively to produce at least some 'lateral' contacts (L1A, L2A, L1B, L2B) in the fitted position, the adjective lateral applying to the sides (C1, C2) of the width (11) of the elongate attachment foot (11A, 11B), on both sides of a longitudinal axis (B) of the attachment foot (11A, 11B),
said attachment foot (11A, 11B) having a generally planar elongate form, the length (L) of the attachment foot (11A, 11B) along a longitudinal axis (B) and the depth of the housing (10A, 10B) being adapted to one another to obtain a given positioning of the cut-off bar (5) on the movable device (8), during contact (PA, PB) of the free longitudinal end of the attachment foot (11A, 11B) against the bottom of the housing (10A, 10B),
said attachment foot (11A, 11B) comprising at least one transverse bead (17) configured to come in contact with a wall of the cooperating housing, the adjective transverse applying to the sides of the thickness (E) of the attachment foot (11A, 11B).

2. Movable assembly according to any of the preceding claims, **characterised in that** the attachment foot (11A, 11B) is provided with at least one locking tooth (16) configured to hook into a wall of the cooperating housing (10A, 10B) in the fitted position.

3. Movable assembly according to claim 2,
**characterised in that** said locking tooth (16) is a pointed projecting pin.

4. Movable assembly according to claim 1,
**characterised in that** said bead (17) is:
- an undulation (18) of the attachment foot (11A, 11B); or
- an increase (19) in the thickness (E) of the attachment foot (11A, 11B); or
- an add-on bead (20) of the attachment foot (11A, 11B).

5. Movable assembly according to any of the preceding claims,
**characterised in that** it comprises at least two attachment feet (11A, 11B) and at least two housings (10A, 10B) which are respectively cooperating.

6. Movable assembly according to claim 5,
**characterised in that** the support element (9) is provided with a branch (12) between the two housings (10A, 10B), and **in that** the at least two attachment feet (11A, 11B) are spaced one from the other so as to have, between them, a space (13) of a form and dimensions respectively adapted to those of said branch (12).

7. Movable assembly according to claim 6,
**characterised in that**, among the at least two attachment feet (11A, 11B), the attachment foot (11A) positioned towards a near end (5A) of the cut-off bar (5) has a bevelled longitudinal end (14), and **in that** the cooperating housing (10A) is provided with a bottom of a shape (15) that at least partly is adapted to said bevelled longitudinal end (14).

8. Movable assembly according to any of claims 5 to 7,
**characterised in that** the at least two attachment feet (11A, 11B) and the cut-off bar (5) are produced as a single part.

9. Movable assembly according to any of claims 5 to 8,
**characterised in that** the at least two attachment feet (11A, 11B) of generally planar form are arranged on the cut-off bar (5) which is also of generally planar form such that one the following two conditions is fulfilled:
- the plane of the at least two attachment feet (11A, 11B) is situated in the plane of the cut-off bar (5);
- the plane of the at least two attachment feet (11A, 11B) is situated outside the plane of the cut-off bar (5).

10. Movable assembly according to any of claims 5 to 9,
**characterised in that** the at least two attachment feet (11A, 11B) having a longitudinal axis (B) are arranged on the cut-off bar (5) such that the longitudinal axis thereof (B) fulfils one of the following conditions:
- it is orthogonal to a longitudinal axis (Y) of the cut-off bar (5);
- it is not orthogonal to the longitudinal axis of the cut-off bar (5).

11. Cut-off mechanism for a motor vehicle headlamp, said cut-off mechanism (3) comprising at least one movable assembly (7) comprising at least one cut-off bar (5) and a movable device (8), as well as an actuating motor (6) of the movable assembly (7),
**characterised in that** said movable assembly (7) is as specified in any of claims 1 to 10.

12. Headlamp for a motor vehicle,
**characterised in that** it comprises at least one cut-off mechanism (3) as specified in claim 11.
